(19) Europäisches Patentamt
European Patent Office
Office européen des brevets

(11) **EP 4 273 539 A1**

(12) **EUROPEAN PATENT APPLICATION**

(43) Date of publication:
**08.11.2023 Bulletin 2023/45**

(21) Application number: **22305651.6**

(22) Date of filing: **02.05.2022**

(51) International Patent Classification (IPC):
**G01N 29/44** $^{(2006.01)}$          **G08B 13/04** $^{(2006.01)}$
**G01N 29/07** $^{(2006.01)}$

(52) Cooperative Patent Classification (CPC):
**G01N 29/07; G01N 29/326; G01N 29/4436;**
G01N 2291/0232; G01N 2291/0423;
G01N 2291/0425

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Saint-Gobain Glass France**
**92400 Courbevoie (FR)**

(72) Inventors:
• **MERCIER, Gerald**
  **60200 Compiegne (FR)**
• **ROSIER, Julie**
  **95430 Auvers-sur Oise (FR)**
• **QI, Shuibao**
  **60200 Compiegne (FR)**

(74) Representative: **Saint-Gobain Recherche**
**B.P. 135**
**39, quai Lucien Lefranc**
**93303 Aubervilliers Cedex (FR)**

(54)   **METHOD FOR DETERMINING THE HEALTH STATUS OF AN AUTOMOTIVE GLASS**

(57)   The present disclosure relates to a method for determining the health status of an automotive glass. The method comprises, by an emitter, generating a guiding wave to propagate on the glass. The method further comprises, by a sensor, receiving the guiding wave after propagation. The method further comprises, by a processing unit, post-processing the received wave to determine a health status of the glass. This constitutes an improved method for determining the health status of an automotive glass.

FIG. 1

## Description

## Technical field

The present invention relates to the field of automotive glass and more specifically to a method for determining the health status of an automotive glass, a system configured to perform such a method, and an automotive glass system comprising an automotive glass and the system configured for performing the method.

## Technical background

Vehicle glass panels experience all kinds of vibrations, object impact, wind loading and so on, under on-track situations. All the vibrations, impact and other loadings can be hazardous and may lead to failure of the glass panels of vehicles after long-term service. Documents FR2749938A1, EP3665431A1, WO2019101884A, WO 2004/021038A1 relate to these matters.

Within this context, there is still a need for an improved method for determining the health status of an automotive glass.

## Summary of the invention

It is therefore provided a method for determining the health status of an automotive glass. The method comprises, by an emitter, generating a guiding wave to propagate on the glass. The method further comprises, by a sensor, receiving the guiding wave after propagation. The method further comprises, by a processing unit, post-processing the received wave to determine a health status of the glass.

The method may comprise one or more of the following features:

- the post-processing comprises detecting a defect based on the received guiding wave;
- the method further comprises:

  - by the sensor, measuring a velocity value of the guiding wave;
  - by the processing unit, comparing the measured velocity value to velocity value of another guiding wave;
  - by the processing unit, determining whether there is a residual stress or pressure of the glass if the comparison results in a discrepancy between the measured velocity value and the velocity value of the other guiding wave;

- the method further comprises:

  - by another emitter, generating the other guiding wave;
  - by another sensor, receiving the other guiding wave and measuring the velocity value of the other guiding wave;

- said emitter and said sensor are a same transducer and said another emitter and said other sensor are another same transducer;
- the transducers are positioned at a positive angle to each other;
- the angle substantially equals 90°;
- the transducers are positioned in the top corners of the glass;
- the velocity value of the other guiding wave is a reference velocity value of a reference guiding wave;
- the method further comprises:

  - by a thermal sensor, measuring a temperature of or near the glass, the determining of whether there is a residual stress comprising comparing the measured temperature to a reference temperature associated with velocity value of the other guiding wave;

- the determining of whether there is a residual stress occurs in real time;
- the method further comprises, before generating said guiding wave and/or generating said other guiding wave, selecting a mode of said guiding wave and/or of said other guiding wave amongst non-dispersive modes; and/or
- said emitter and said sensor are a same transducer.

The processing unit may coordinate with a series of analogue and digital signal processing elements. The signal processing elements may filter and select the wave signals from background noise. The signal processing elements may filter and select the wave signals from background noise before post-processing of the received wave. The selection of the guiding waves may comprise analyzing the wave dispersion of the automotive glass panels and selecting the wave modes without dispersion. A DSP unit may process the received wave signal, i.e. received wave, because the wave signal is relatively small and complex algorithms may sometimes be preferred to abstract the features of the waves.

It is also provided a system configured to perform the method for determining the health status of an automotive glass. The system comprises one or more sensors, one or more emitters, and a processing unit. The one or more emitters of the system are configured to generate a guiding wave to propagate on the glass according to the method. The one or more sensors are configured to receive the guiding wave after propagation according to the method. The processing unit is configured to post-process the received wave to determine a health status of the glass according to the method. The processing unit is more generally configured to perform the steps of the method performed by a processing unit as further discussed hereinafter. The system may further comprise the said another emitter, which is configured to generate another guiding wave according to the method. The system may further comprise the said another sensor, which is configured to receive the other guiding wave and to measure the velocity value of the other guiding wave according to the method. The system may further comprise the said temperature sensor, which is configured to measure a temperature of or near the glass according to the method. As discussed hereinafter for the method, each respective sensor and emitter pair that the system comprises may form a same respective transducer. The system may comprise a series of analogue and digital signal processing elements. The system may be provided as a kit comprising the one or more sensors, the one or more emitters and the controlling unit, and optionally the other sensor and emitter and/or the temperature sensor. The kit may comprise a notice to assemble the system. Alternatively, the system may be provided already assembled.

It is also provided an automotive glass system comprising an automotive glass and the system configured to perform the method. The automotive glass system may be provided as a kit comprising the system configured to perform the method and the glass non-assembled, optionally with a notice of instructions to assemble the system configured to perform the method with the glass. Alternatively, the automotive glass system may be provided as a single device formed by the glass with the system configured to perform the method assembled to the glass.

**Brief description of the drawings**

Non-limiting examples will now be described in reference to the accompanying drawing, where:

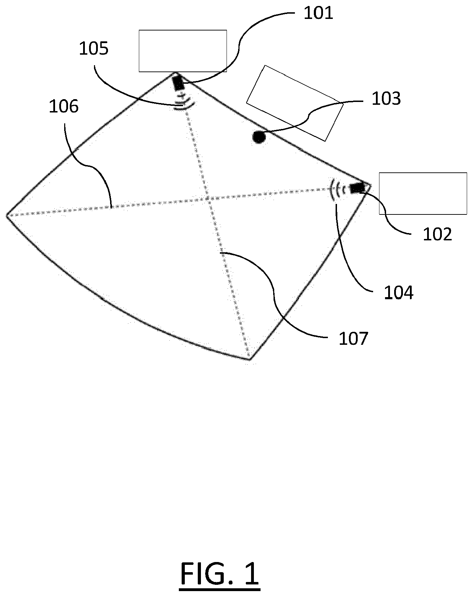

FIG. 1 shows an example of the method.

**Detailed description**

It is provided a method for determining the health status of an automotive glass. The method comprises, by an emitter, generating a guiding wave to propagate on the glass. The method further comprises, by a sensor, receiving the guiding wave after propagation. The method further comprises, by a processing unit, post-processing the received wave to determine a health status of the glass.

Such a method forms an improved solution for determining the health status of an automotive glass. The method enables improved determination of the health status of an automotive glass in an efficient and simplified manner.

This is achieved by the method comprising generating a guiding wave to propagate on the glass by an emitter, and receiving the guiding wave after propagation by a sensor. Guiding waves are known for inspection and detection of failures, such as cracks, fissures, holes or voids, and fatigue (*e.g.* residual stress) of materials, but their use for automotive glass inspection and defect or fatigue detection has not yet been investigated. The inventors have however discovered that the planar and thin structure of automotive glasses can support guiding waves so that a one or more guiding waves can be efficiently used to inspect an automotive glass, so as to determine the health status of the glass, *e.g.* by detecting and evaluating the defects and/or measure the glass residual stress. The use of such a wave for such a task provides improved efficiency and simplicity (as compared for example to the use of bulk waves) in the determination of the health status of the wave since one guiding wave emitter (*e.g.* a transducer) can cover a large area. Thereby, using a guiding wave, as does the method, saves electronics, wave emitters, wave sensors, and transducers. The use of a guiding wave also enables the determination of the health status of the automotive glass to be non-invasive. Moreover, by using of a guiding wave, the method goes further than the vibration detection by also determining the health status of the glass.

The method for determining the health status of an automotive glass comprises:

- by an emitter, generating a guiding wave to propagate on the glass;
- by a sensor, receiving the guiding wave after propagation; and
- by a processing unit, post-processing the received wave to determine a health status of the glass.

The method determines the health status of an automotive glass. The health status of the automotive glass refers to the condition or state of the automotive glass at a particular point or stage during its lifetime. Determining the health status of the automotive glass thus comprises determining any parameter or event related to the state of the automotive glass, such as for example detecting a defect on the glass or determining a residual stress of the glass. The automotive glass is any glass panel of any vehicle (*e.g.* a car), such as, for example, a windscreen, a sunroof, a backlight or a sidelight. The glass may be, for example, one-layered tempered glass, or laminated glass.

The method uses an emitter and a sensor, i.e. at least one emitter and at least one sensor. The emitter (*i.e.* each emitter used in the method) is an electronic device used to send out or emit a wave. In the present case, the emitter is configured to emits a guiding wave and emits such a wave during the method. The emitter may, for example, emit ultrasonic guiding waves. The emitter may for example comprise a piezoelectric material, or be of electromagnetic design. The sensor (*i.e.* each sensor used in the method) is a device which receives and measures a wave. Each sensor herein is configured to receive and measure a guiding wave. The sensor may be configured to measure ultrasonic guiding waves. The method uses at least one respective pair consisting of a respective emitter and a respective sensor. The method may use one or more such pairs, *i.e.* one or more emitters with one or more sensors, where each emitter emits a respective guiding wave and each sensor receives the emitted guiding waves. Each sensor and emitter of each pair may for a single same transducer, which works as both an emitter and a sensor, as further discussed hereinafter. The transducers used by the method may be positioned as an array of transducers on the glass. Each emitter, sensor and transducer herein may be fixed to the glass or to the automotive vehicle body (*e.g.* a car frame) by any known fixation technique. Each emitter, sensor and transducer may be positioned on face 1 or face 2 of the automotive glass, the automotive glass being, for example, tempered glass (face 1 is the external surface of the glass and face 2 is the internal surface of the glass). Generally, for tempered glass, there are only two faces, face 1 and face 2. Alternatively, each emitter, sensor and transducer may be positioned on face 4 of the automotive glass, the automotive glass being, for example, laminated glass. For laminated glass (most of the windshield), there are three layers (glass-PVB-glass): face 1 is the external surface of the first glass, face 2 is the internal surface of the first glass and the first surface of the PVB layer, face 3 is the second surface of the PVB and the first surface of the second glass, and face 4 is second (internal) surface of the second glass.

The guiding wave generated by the emitter (*i.e.* each guiding wave generated by a respective emitter) is a wave the energy of which is concentrated near a boundary or between boundaries. The guide wave may be, for example, a Lamb wave (symmetric/asymmetric wave modes, A0/S0, A1/S1, etc.), a Rayleigh wave, a shear horizontal wave (SH0, SH1, etc.) or a surface acoustic wave. The guiding wave may for example, be an ultrasonic guiding wave. The propagation of the guiding wave on the glass refers to the journey made by the wave across the glass surface after it has been emitted by an emitter. Each emitter is thus configured for emitting a guiding wave so that it travels on the glass.

The method further comprises post-processing the wave received by the sensor (*i.e.* each wave received by each sensor) to determine a health status of the glass. The post-processing may comprise applying any method to process the received guiding wave(s) so as to determine the health status of the glass. The post-processing is further discussed hereinafter.

The post-processing is carried out by a processing unit. The processing unit may also be referred to as a "data processing module" or "data processing unit". The processing unit may be the processing unit of any suitable computer system, such as a general computer or a microcontroller. The processing unit may consist of one or more processors of such system. The processing unit may consist of one or more CPU's (central processing unit) of the system. The processing unit may be coupled with a memory, the memory having recorded thereon a computer program comprising instructions which, when the program is executed, cause the processing unit to perform the post-processing of the received wave. The processing unit may be connected to each emitter and sensor used by the method in any suitable manner (*e.g.* by a wired connection), so that the processing unit may perform the post-processing upon receiving the guiding wave(s) measured by the sensor(s). Alternatively, the received wave(s) may be transmitted, *e.g.* by means of a wireless connection (for example by means of a microcontroller or another suitable processing unit connected to the emitter(s) and sensor(s) and to a wireless connection device such as a 4G/5G chip), to an external computer system that comprises the processing unit performing the post processing.

The computer program may comprise instructions executable by a computer, the instructions comprising means for causing the above processing-unit to perform the post-processing. The program may be recordable on any data storage medium, including the memory of the processing unit. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Post-processing steps may be performed by a programmable processor executing a program of instructions to perform functions of the post-processing by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the post-processing. The computer program may alternatively be stored and executed on a server of a cloud computing environment, the server being in communication across a network with one or more clients. In such a case a processing unit executes the instructions comprised by the program, thereby causing the post-processing to be performed on the cloud computing environment.

The post-processing may comprise detecting a defect based on the received guiding wave. The defect may be any irregularity existing along the automotive glass. The defect may for example consist in one or more cracks, one or more fissures, one or more holes, and/or one or more voids in the glass. For that, the post-processing may comprise applying any suitable method or methodology for detecting such a defect based on the received guiding wave. Such a method or methodology may be found, for example, in the document, April 21, 1942 as U.S. Patent No. 2,280,226, titled "Flaw Detecting Device and Measuring Instrument", which is incorporated herein by reference.

An example of a method for detecting a defect is now briefly discussed.

In this example, there may be one or more pairs made of an emitter emitting a guiding wave and a sensor receiving the wave, each pair consisting for example of a transducer (*e.g.* an ultrasound transducer). One or more guiding waves are thus generated and received, including one or more Lamb waves (*e.g.* symmetric/asymmetric wave modes, A0/S0, A1/S1), one or more Rayleigh waves, one or more shear horizontal waves (SH0, SH1), and/or one or more shear vertical waves. The method may use, where appropriate, the pulse echo method or pitch catch method for the inspection, depending on the layout and number of the pairs of sensors and emitters (or transducers). The mode of each emitted guiding wave may be selected amongst non-dispersive or minimally dispersive modes, so as to avoid dispersive modes. In an implementation of the detection method, the frequency Rayleigh-Lamb equations governing the plate guiding waves are as follows:

Symmetrical:

$$\frac{\tan(qh)}{\tan(ph)} = -\frac{(4k^2pq)}{(q^2 - k^2)^2}$$

Asymmetrical:

$$\frac{\tan(qh)}{\tan(ph)} = -\frac{(q^2 - k^2)^2}{4k^2pq}$$

where $p$ and $q$ are denoted as:

$$p^2 = \frac{\omega^2}{c_L^2} - k^2$$

$$q^2 = \frac{\omega^2}{c_T^2} - k^2$$

The group velocity of Lamb waves can be expressed below:

$$c_g = c_p^2 \left[ c_p - (fd)\frac{\mathrm{d}c_p}{\mathrm{d}(fd)} \right]^{-1}$$

where variables $q$ and $p$ are defined in the equations, $h$ is the half of the thickness (i.e. d/2), $k$ is the wave number, $\omega$ is the angular frequency, $c_L$ is the longitudinal wave velocity, $c_T$ is the shear wave velocity, $c_g$ is the group velocity, $f$ is the frequency, $c_p$ is the phase velocity and $d$ is the thickness of the structure for guiding waves.

The resolution of the defect is in this implementation governed by the frequency and the wave mode. Generally, the higher the frequency, the better the resolution. In implementations, an array of transducers is used so as to improve the spatial resolution or the positioning of the defects.

The method may additionally or alternatively comprise determining a residual stress or pressure of the glass using the sensor, emitter and processing-unit. For that, the method comprises by the sensor, measuring a velocity value of the guiding wave, and by the processing unit, comparing the measured velocity value to velocity value of another guiding wave. Then, the method comprises, by the processing unit, determining whether there is a residual stress or pressure of the glass if the comparison results in a discrepancy or disparity between the measured velocity value and the velocity value of the other guiding wave. This may mean that the method may assess a disparity between the two velocity values (e.g. may assess that a difference between the two values exceeds a predefined threshold) and correlate this disparity with the presence of a residual stress or pressure. This determination may be carried out by any suitable method that compares the measured velocity with the velocity of the other guiding wave and that correlates the absence or presence of a residual stress or pressure to this comparison. The previously discussed formulation of the equations governing guiding waves may be used for computing the velocity of any guiding wave herein.

For determining the residual stress or pressure, the method may use another emitter and another sensor, which may be a same transducer (in this case the said sensor and emitter also form a same transducer). In this case the method may apply the pitch-catch method. Said other emitter generates the other guiding wave and said other sensor receives the other guiding wave. The other sensor measures the velocity value of the other guiding wave. In other words, in this case, two guiding waves are emitted and received (*e.g.* by two transducers as previously discussed) and the processing unit then determines whether there is a residual stress of the glass or pressure along the glass by comparing the velocities of the two waves and determining whether the comparison results in a discrepancy/disparity between the measured velocity value and the velocity value of the other guiding wave. According to the fundamentals of waves in a solid, the velocities of the guiding waves with different directions can be different if there is residual stress in the inspection panel. The transducers may therefore be positioned at a positive angle to each other (*i.e.* positioned such that the respective waves they emit are emitted so as to form this positive angle). The transducers may be positioned separately, for example, one in the left (*e.g.* top or bottom) corner of the glass, the other in the right (*e.g.* top or bottom) corner of the glass. According to another example, the two transducers may be positioned in the top corners of the glass (*i.e.* one in each corner). This results in the propagation direction of the guiding waves (e.g. a Lamb wave or a Rayleigh wave, of which governing equations have been previously discussed) generated by the two emitters to be different. The angle between the transducers may equal or substantially equal 90°.

Alternatively, the value of the other guiding wave may be, instead of that of a measured guiding wave, a reference value of a reference guiding wave. In this case, the method may use a single sensor and a single emitter, which may form a single same transducer. The sensor measures a velocity value of the guiding wave emitted by the emitter as previously discussed, and the processing unit compares the measured velocity value to the reference velocity value. The processing unit then determines whether there is a residual stress of the glass or pressure along the glass if the comparison results in a discrepancy (or disparity) between the measured velocity value and the reference velocity value. The method may in this case use the pulse-echo method since only one pair of sensor-emitter (*e.g.* only one transducer) may be used.

In this case, the temperature of the glass or near the glass may be an additional variable that the determining of whether there is a residual stress may use. Indeed, the reference value may be correlated to the presence of a residual stress or pressure for a certain temperature or a certain range of temperature of the glass or near the glass. To the contrary, in the previous case of two measured velocities of two measured waves, the temperature is not a variable. The method may thus further comprise, by a thermal sensor, measuring a temperature of or near the glass (*i.e.* a temperature of the glass or a temperature of the air near the glass). The determining of whether there is a residual stress then comprises determining whether there is a residual stress by comparing the measured temperature to a reference temperature associated with velocity value of the other guiding wave. In other words, the known stress and temperature of the glass corresponding to the reference velocity value may be used as a reference value to correlate the measured velocity value and measured temperature with the residual stress or pressure of the glass under the conditions in which the temperature and velocity are measured by the method. For example, the velocity of a glass without stress may be used as a benchmark to get the stressed glass.

In any case, be it the case of the use of another measured velocity value or the case of a reference velocity value, which have both been discussed, the velocity (also referred to as "group velocity") difference of the two guiding waves can be well correlated with the residual stress of the glass. With benchmarking the standard glass panel with a known stress or calibrating a strain gauge, a stress gauge can be achieved. By comparing the two stresses with the original status, a safety threshold may be determined (or by directly comparing the guiding wave velocity to the guiding wave velocity of the benchmarked glass, as the threshold can be set by the velocity difference of the two). The safety threshold may be expressed as a part of the health status of the glass. The safety threshold may be expressed as a part of the health status of the glass. That is to say, if the method comprises taking an initial status of the glass, a sensor such as a temperature sensor may be needed, because the velocity can be also influenced by the structure temperature. However, if the method comprises taking two emitters/sensors with an angle, there's no need to use such a sensor. The threshold can be directly set by the velocity difference of waves in two directions. The health status of the glass may be beneficial when, in some cases, the residual stress of a material structure is to be avoided. When the internal stress reaches a certain value that the material can support, the stress energy can be released, and thus cause failures of the structure (e.g. breakage, fissures, and/or cracks).

Advantageously and different from the traditional strain gauge, the stress that may be measured by generating, receiving and post-processing the guide wave can result in an overall or averaged value of the glass, not the stress at a specific position or on the surface.

The residual stress of the glass panel may be monitored in real time under on-track conditions (i.e. the determining of whether there is a residual stress may occur in real time). As previously discussed, depending on, for example, the preferred layout of the sensors and emitters, and/or, the total desired number of sensors and emitters, the method may be applied as per the pulse-echo method or the pitch-catch method. For example, the pulse-echo method, making use of one sensor and emitter or one transducer, may be preferred to minimize use of hardware. The pulse-echo method uses one sensor as an emitter (e.g. ultrasound emitter) and receiver (e.g. ultrasound receiver) as well. In order to economize the hardware, the pulse-echo method may also be preferable for less-damping materials and/or structures. Examples of such materials/structures may include tempered glass, monolithic glass and/or laminated glass with less damped PVB or standard PVB. The pitch-catch method uses an emitter (e.g. ultrasound emitter) and another separate receiver (e.g. ultrasound receiver) to get the signal, i.e. guiding wave. The pitch-catch method may be preferable for large damping materials and/or structures. In other words, for high damping material, such as laminated acoustic PVB, the pitch-catch method should be preferred to ensure enough signal.

As previously discussed, the method may comprise, before generating said guiding wave and/or generating said other guiding wave (or any generated guiding wave herein), selecting a mode of said guiding wave and/or of said other guiding wave amongst non-dispersive modes. For example, a Raleigh wave may be preferred for surfaces of a maximum thickness of 1 mm.

The determined health status may indicate whether or not the automotive glass is in functional condition. Additionally or alternatively, the health status may be evaluated to make a prediction regarding the condition of the automotive glass in the future. Such a prediction may be a short term prediction. Alternatively, such a prediction may be a long term prediction. Alternatively, such a prediction may determine the remaining lifespan of the automotive glass. The method may comprise assessing such an indication or making such a prediction based on the determined health status.

The processing unit may coordinate with other electronic hardware, such as, for example, a DSP (digital signal processor) board, an FPGA (field programmable gate array), an amplifier and/or a pre-amplifier. The processing unit may coordinate with a series of analogue and digital signal processing elements. The signal processing elements may filter and select the wave signals from background noise. The signal processing elements may filter and select the wave signals from background noise before post-processing of the received wave. The selection of the guiding waves may comprise analyzing the wave dispersion of the automotive glass panels and selecting the wave modes without dispersion. A DSP unit may process the received wave signal, i.e. received wave, because the wave signal is relatively small and complex algorithms may sometimes be preferred to abstract the features of the waves. All electronic hardware herein may, for example, be installed on the dashboard of the vehicle, or another location close to the desired glass panel of the vehicle (e.g. an appropriate pillar of the vehicle, such as the so-called "Pillar A"). The screen of the dashboard may display the health status of the automotive glass and/or any other determined value relating to the health status. Additionally or alternatively, a 4G or 5G chip or a Bluetooth device, or any other suitable communications means may transmit the health status of the automotive glass and/or any other determined value relating to the health status to an external internet source.

Figure 1 refers to an example of the method and of the system, wherein transducers 101, 102 are positioned on automotive glass in the form of a glass panel, at substantially 90° to each other (i.e. the directions in which they emit the waves form substantially a 90° angle). The transducers are positioned in the top corners of the glass panel. According to one configuration, transducers 101, 102, each comprising an emitter and sensor, generate guiding waves 104, 105 which propagate along the glass according to trajectories 106, 107. The propagated waves 104, 105 are reflected back to the transducers 101, 102 and are received by the transducers 101, 102. The transducers 101, 102 measure a velocity value of the received waves 104, 105. A processing-unit (not shown) then performs post-processing on the received wave to determine a health status of the glass. The processing unit compares the measured velocity value of one guiding wave 104 of the two guiding waves to a velocity value of the other guiding wave 105 of the two guiding waves. The processing unit then determines whether there is a residual stress or pressure along the glass if the comparison results in a discrepancy/disparity between the measured velocity value of the first guiding wave 104 and the velocity value of the second guiding wave 105.

According to another configuration of the example, a temperature sensor 103 placed on the automotive glass and between both transducers 101, 102 measures a temperature on or near the glass. One of either transducer 101, 102 generates a guiding wave 104, 105 which propagates along the glass according to a trajectory 106, 107. The propagated wave 104, 105 is reflected back to the transducer 101, 102 and is received by the transducer 101, 102. The transducer 101, 102 measures a velocity value of the received wave 104, 105. A processing-unit (not shown) then performs post-processing on the received wave to determine a health status of the glass. The processing unit determines whether there is a residual stress by comparing the measured temperature to a reference temperature associated with velocity value of the other guiding wave, the velocity value of the other guiding wave being a reference velocity value of a reference guiding wave.

**Claims**

1. A method for determining the health status of an automotive glass, the method comprising:

   - by an emitter, generating a guiding wave to propagate on the glass;
   - by a sensor, receiving the guiding wave after propagation; and
   - by a processing unit, post-processing the received wave to determine a health status of the glass.

2. The method according to claim 1, wherein the post-processing comprises detecting a defect based on the received guiding wave.

3. The method according to claim 1 or 2, wherein the method further comprises:

   - by the sensor, measuring a velocity value of the guiding wave;
   - by the processing unit, comparing the measured velocity value to velocity value of another guiding wave;
   - by the processing unit, determining whether there is a residual stress or pressure of the glass if the comparison results in a discrepancy between the measured velocity value and the velocity value of the other guiding wave.

4. The method according to claim 3, wherein the method further comprises:

> - by another emitter, generating the other guiding wave;
> - by another sensor, receiving the other guiding wave and measuring the velocity value of the other guiding wave.

5. The method according to claim 4, wherein said emitter and said sensor are a same transducer and said another emitter and said other sensor are another same transducer.

6. The method according to claim 5, wherein the transducers are positioned at a positive angle to each other.

7. The method according to claim 6, wherein the angle substantially equals 90°.

8. The method according to claim 7, wherein the transducers are positioned in the top corners of the glass.

9. The method of claim 3, wherein the velocity value of the other guiding wave is a reference velocity value of a reference guiding wave.

10. The method of claim 9, wherein the method further comprises:

> - by a thermal sensor, measuring a temperature of or near the glass, the determining of whether there is a residual stress comprising comparing the measured temperature to a reference temperature associated with velocity value of the other guiding wave.

11. The method according to any one of claims 3 to 10, wherein the determining of whether there is a residual stress occurs in real time.

12. The method according to any one of claims 1 to 10, wherein the method further comprises, before generating said guiding wave and/or generating said other guiding wave, selecting a mode of said guiding wave and/or of said other guiding wave amongst non-dispersive modes.

13. The method of any one of claims 1 to 12, wherein said emitter and said sensor are a same transducer.

14. A system comprising one or more sensors, one or more emitters, and a processing unit, the system being configured to perform the method of any one of claims 1 to 13.

15. An automotive glass system comprising an automotive glass and a system according to claim 14.

FIG. 1

Europäisches
Patentamt

European
Patent Office

Office européen
des brevets

**EUROPEAN SEARCH REPORT**

Application Number

EP 22 30 5651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 840 495 A (UNIV TIANJIN) 13 June 2017 (2017-06-13) * the whole document * | 1-15 | INV. G01N29/44 G08B13/04 G01N29/07 |
| X | CN 111 366 640 A (INST OPTICS & ELECTRONICS CAS) 3 July 2020 (2020-07-03) figures 1-3 and related description; * abstract * | 1,14 | |
| X,D | WO 2019/101884 A1 (AGC GLASS EUROPE [BE]) 31 May 2019 (2019-05-31) * abstract; figures 1-3 * * page 8, line 6 - page 10, line 16 * | 1,14,15 | |

|  |
|---|
| TECHNICAL FIELDS SEARCHED (IPC) |
| G08B G01N G01L |

The present search report has been drawn up for all claims

| Place of search | Date of completion of the search | Examiner |
|---|---|---|
| Munich | 2 September 2022 | Uttenthaler, Erich |

EPO FORM 1503 03.82 (P04C01)

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

## ANNEX TO THE EUROPEAN SEARCH REPORT
## ON EUROPEAN PATENT APPLICATION NO.

EP 22 30 5651

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2022

| Patent document cited in search report | | Publication date | Patent family member(s) | | Publication date |
|---|---|---|---|---|---|
| CN 106840495 | A | 13-06-2017 | NONE | | |
| CN 111366640 | A | 03-07-2020 | NONE | | |
| WO 2019101884 | A1 | 31-05-2019 | AU | 2018371173 A1 | 11-06-2020 |
| | | | CA | 3083193 A1 | 31-05-2019 |
| | | | CN | 111433824 A | 17-07-2020 |
| | | | EA | 202091224 A1 | 08-09-2020 |
| | | | EP | 3714443 A1 | 30-09-2020 |
| | | | JP | 2021504212 A | 15-02-2021 |
| | | | US | 2020342726 A1 | 29-10-2020 |
| | | | WO | 2019101884 A1 | 31-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2749938 A1
- EP 3665431 A1
- WO 2019101884 A
- WO 2004021038 A1
- US 2280226 A